# EUROPÄISCHE PATENTSCHRIFT

(11) **EP 2 050 552 B1**
(45) Veröffentlichungstag und Bekanntmachung des Hinweises auf die Patenterteilung: **21.04.2010**
(21) Anmeldenummer: 08166994.7
(22) Anmeldetag: 20.10.2008
(51) Int. Cl.: B29B 17/00

(54) **Vorrichtung zum Austragen von Schüttgut**
Device for applying bulk material
Dispositif de sortie de produits en vrac

(30) Priorität: 18.10.2007 DE 102007050315
(43) Veröffentlichungstag der Anmeldung: 22.04.2009
(73) Patentinhaber: Krones AG, 93073 Neutraubling (DE)
(72) Erfinder: Momsen, Jan, 24943 Flensburg (DE); Peters, Norbert, 24943 Flensburg (DE); Kirchhoff, Timm, 24977 Westernholz (DE); Haase, Arne, 24955 Harrislee (DE)
(74) Vertreter: Bittner, Bernhard

(56) Entgegenhaltungen:
- EP-A- 0 254 953
- DE-A1- 2 519 773
- DE-A1- 19 953 659
- JP-A- 58 089 523
- JP-A- 61 018 642

## Beschreibung

Die vorliegende Erfindung bezieht sich auf eine Vorrichtung zum Austragen von Schüttgut. Im Rahmen von Recyclingprozessen für Kunststoffflaschen und insbesondere für PET-Flaschen ist es üblich, diese Flaschen zu zerkleinern und anschließend die zerkleinerten Einzelteile bzw. Flakes zu reinigen, um sie anschließend der Wiederverwertung zuzuführen. Im Rahmen dieses Wiederverwertungsprozesses ist es bei einigen Verfahren notwendig, das Schüttgut aus einem Behältnis zu entnehmen. Bei dieser Entnahme des Schüttguts besteht oftmals das Problem, dass das Schüttgut Brücken bildet bzw. sich einige Partikel dieses Schüttguts miteinander verkeilen.
Eine Vorrichtung zum Austragen von Schüttgut ist aus der JP-A-61018642 bekannt.
Der vorliegenden Erfindung liegt daher die Aufgabe zugrunde, einen Austragsboden zur Verfügung zu stellen, der auch für brückenbildende Schüttgüter geeignet ist. Die Erfindung wird unter Bezugnahme auf PET-Flakes aus einem Recyclingprozess beschrieben, es wird jedoch darauf hingewiesen, dass die Erfindung auch für anderes Schüttgut geeignet ist.

Eine erfindungsgemäße Vorrichtung zum Austragen von Schüttgut weist ein Behältnis auf, in das Schüttgut einfüllbar ist. Weiterhin ist ein in dem Behältnis angeordnetes Verteilgitter und eine unterhalb dieses Verteilgitters angeordnete Zwischenplatte vorgesehen, wobei die Zwischenplatte wenigstens eine Durchtrittsöffnung für das Schüttgut aufweist. Weiterhin ist unterhalb der Zwischenplatte eine Öffnung vorgesehen, durch welche hindurch das Schüttgut aus dem Behältnis entnommen werden kann. Erfindungsgemäß ist die Zwischenplatte gegenüber dem Verteilgitter drehbar und das Verteilgitter stationär gegenüber dem Behältnis angeordnet.

Durch das Verteilgitter wird der Bereich oberhalb der Zwischenplatte in mehrere Segmente aufgeteilt und anschießend wird durch die Drehung der Zwischenplatte bewirkt, dass das Stückgut durch die Durchtrittsöffnung in die Zwischenplatte fallen kann. Durch die Segmentierung der Fläche oberhalb der Zwischenplatte wird eine Brückenbildung des Schüttguts verhindert.

Vorzugsweise weist das Behältnis eine Flanscheinrichtung auf, um an Silos, Vorrats-, Reaktionsbehälter oder dergleichen angeflanscht zu werden. Genauer gesagt wird vorzugsweise die gesamte Vorrichtung unten an Silos , Vorrats-, Reaktionsbehälter oder dergleichen angeflanscht, wobei diese Silos zylindrisch, konisch schließend, konisch öffnend oder auch eckig ausgeführt sein können. Die Vorrichtung besteht damit aus einem Zweikammersystem, wobei eine Kammer oberhalb der Zwischenplatte angeordnet ist und die andere Kammer unterhalb der Zwischenplatte. Der obere Bereich, das heißt der Bereich oberhalb der Zwischenplatte dient als Vorratskammer und enthält auch das stationäre Verteilgitter (auch als Austragsgitter bezeichnet). Unterhalb der Zwischenplatte ist die Austragskammer. Aus diesem Bereich wird das Schüttgut aus der Vorrichtung und damit aus dem Silo ausgetragen und bevorzugt einem weiteren Aggregat oder anderen Transportsystemen, wie Förderbändern oder Lastkraftwagen zugeführt. Genauer gesagt dient zum Austragen des Schüttguts die unterhalb der Zwischenplatte vorgesehene Öffnung.

Bei einer vorteilhaften Ausführungsform ist unterhalb der Zwischenplatte eine gegenüber dem Behältnis stationäre Bodenplatte vorgesehen und die Öffnung in dieser Bodenplatte angeordnet. Damit kann im Betrieb das Schüttgut durch die Durchtrittsöffnung der Zwischenplatte auf die Bodenplatte fallen.

Vorzugsweise ist zu diesem Zweck oberhalb der Bodenplatte eine gegenüber dem Behältnis drehbare Verschiebeeinrichtung vorgesehen, welche das Schüttgut gegenüber der Bodenplatte verschiebt. Genauer gesagt wird in dieser Austragskammer, das heißt dem Bereich oberhalb der Bodenplatte das Schüttgut durch einen rotierenden Rechen über die Öffnung bzw. Rohrleitung ausgetragen.

Durch diese Ausführungsform ist der erfindungsgemäße Austragsboden für Schüttgüter jeglicher Art geeignet. Selbst problematische Schüttgüter mit Neigung zur Brückenbildung können durch diesen Austrag gleichmäßiger ausgetragen werden.

Vorzugsweise weist die Verschiebeeinrichtung eine an einen Öffnungsquerschnitt der Öffnung in der Bodenplatte angepasste Krümmung auf. Darunter ist zu verstehen, dass die Verschiebeeinrichtung bzw. der Rechen derart gekrümmt ist, dass das Schüttgut in denjenigen radialen Bereich der Bodenplatte gedrängt wird, in dem sich auch die Öffnung befindet. Genauer gesagt wird das Schüttgut bei der Bewegung der Verschiebeeinrichtung in einen Bereich der Verschiebeeinrichtung gedrängt, der eine Ausnehmung in der Drehrichtung bildet. In diesem Bereich ist auch die Öffnung in der Bodenplatte vorgesehen. Der Rechen kann je nach Anwendungsfall aber auch gerade oder negativ gekrümmt sein.

Vorzugsweise ist die Durchtrittsöffnung ein sich in einer radialen Richtung der Zwischenplatte erstreckender Schlitz. Bei einer weiteren vorteilhaften Ausführungsform können auch mehrere derartige Schlitze vorgesehen sein. Durch das Vorsehen dieser Schlitze wird ein sehr gleichmäßiges Austragen des Schüttguts ermöglicht. Vorzugsweise erstreckt sich die Durchtrittsöffnung im Wesentlichen entlang im Wesentlichen der gesamten radialen Länge der Zwischenplatte, so dass in dem gesamten radialen Bereich das Schüttgut durch die Zwischenplatte hindurch treten kann. Zur Erhöhung der Stabilität können auch Stege vorgesehen sein, welche die Ränder der Schlitze miteinander verbinden.

Für den Fall, dass mehrere derartige Durchtrittsöffnungen in Form von Schlitzen vorgesehen sind, sind diese besonders Bevorzugt im Wesentlichen in Umfangsrichtung gleichmäßig zueinander verteilt.

Bei einer weiteren vorteilhaften Ausführungsform weist die Zwischenplatte in der Drehrichtung vor der Durchtrittsöffnung eine Schrägfläche auf, welche vorzugsweise die unter dieser Schrägfläche liegende Durchtrittsöffnung verdeckt. Wie gesagt, kann diese rotierende Zwischenplatte einen oder mehrere Austragsschlitze aufweisen. Auf diese Weise wird ein direktes Durchrutschen des Schüttguts durch die Zwischenplatte verhindert und diese Schrägfläche sorgt während der Drehung der Zwischenplatte für eine Verdichtung des Schüttguts unmittelbar vor der Schrägfläche bzw. Rampe, so dass so gestauchtes Material hinter der Rampe entlastet wird und durch die Zwischenplatte hindurch in die Austragskammer fällt. Bevorzugt ist die Schrägfläche bzw. Rampe zwischen 20° und 30° gegenüber der Ebene der Zwischenplatte geneigt.

Die Anzahl und Form dieser Austragsschlitze bzw. Durchgangsöffnungen ist dem Schüttgut angepasst und steht in engem Zusammenhang zu der gesamten Grundfläche der Vorrichtung. Das Verteilgitter besteht damit vorzugsweise aus senkrecht verbauten Flächen, das heißt senkrecht gegenüber der Zwischenplatte stehenden Blechen und dem darunter angeordneten Entleerboden.

Vorzugsweise weist die Vorrichtung eine Antriebseinrichtung auf, welche die Zwischenplatte antreibt und diese Antriebseinrichtung ist unterhalb des Behältnisses vorgesehen. Auf diese Weise ist es möglich, in Abhängigkeit von Dichtungswerkstoffen auch hohe Prozesstemperaturen von bis zum 260° bis 300° zu erreichen. Durch diese Ausführungsform sind Anwendungen im Vakuumbereich oder im Überdruckbereich denkbar. Die Zwischenplatte dreht sich mit einer Geschwindigkeit zwischen 1 U/min und 10 U/min, bevorzugt zwischen 1 U/min und 7 U/min und - insbesondere im Falle von großtechnischen Anwendungen - zwischen 1 U/min und 3 U/min. Vorzugsweise ist der Antriebsmotor frequenzgeregelt.

Bei einer weiteren vorteilhaften Ausführungsform weist das Verteilgitter zwischen drei und zwölf, bevorzugt zwischen vier und zehn und besonders bevorzugt zwischen vier und acht sich in der radialen Richtung der Zwischenplatte erstreckende Arme auf. Bevorzugt sind diese Arme bzw. diese sternförmig angeordneten senkrechten Bleche nach oben hin angespitzt, um jegliche Brückenbildung zu vermeiden. Je niedriger die Anzahl dieser Arme bzw. Bleche, desto größer ist die Neigung zur rückwärtigen Vermischung des Schüttguts. Je größer jedoch die Anzahl dieser Arme bzw. Bleche ist, desto höher ist die Gefahr der Brückenbildung in der Vorrichtung. Damit ist vorzugsweise der Abstand dieser Arme dem Schüttgut angepasst und auf diese Weise wird ein Zerkleinern oder Zermahlen des Schüttguts sowie ein Mitdrehen desselben verhindert und so das Produkt geschont. Weiterhin ist es möglich, die Arme gegenüber der Zwischenplatte schräg zu stellen.

Vorzugsweise ist das Verteilgitter von der Zwischenplatte beabstandet. Damit erfolgt die Entleerung der Zwischenplatte schabend und auf diese Weise wird der Kernfluss minimiert. Auch ist es möglich, das Schüttgut aus dem Behältnis nach dem "first-in-first-out-Prinzip" zu gestalten. Daneben ist die Nutzung auch für alle Arten zeitgesteuerter Prozesse in Reaktoren denkbar. Vorzugsweise liegt der Abstand zwischen den Armen und der Zwischenplatte zwischen 10mm und 20mm.

Bei einer weiteren vorteilhaften Ausführungsform weist die Vorrichtung oberhalb der Zwischenplatte einen zentral angeordneten kegelförmigen Verteilkörper auf. Besonders bevorzugt ist damit dieser kegelförmige Körper so angeordnet, dass seine Symmetrieachse mit der Symmetrieachse der Zwischenplatte zusammenfällt. Dieser Kegel bewirkt eine fast vollständige Entleerbarkeit des Silos, was insbesondere für Prozesse, bei denen Produktwechsel erforderlich sind, vorteilhaft ist. Vorzugsweise rotiert dieser kegelförmige Körper gemeinsam mit der Zwischenplatte.

Damit besteht die Vorratskammer, die oberhalb der Zwischenplatte gebildet wird, aus einem bevorzugt zylindrischen Rohr, dem oben erwähnten Verteilgitter, dem erwähnten kegelförmigen Körper und der rotierenden Zwischenplatte.

Die vorliegende Erfindung ist weiterhin auf ein Verfahren zum Austragen von Schüttgut aus einem Behältnis gerichtet, wobei in einem ersten Schritt das Schüttgut in das Behältnis, beispielsweise aus einem Silo eingefüllt wird, und genauer das Schüttgut von oben auf eine Zwischenplatte aufgebracht wird, welches sich gegenüber einem Verteilgitter, welches oberhalb der Zwischenplatte angeordnet ist, dreht. Weiterhin wird das Schüttgut durch we-nigstens eine in der Zwischenplatte vorgesehene Öffnung durchgeführt. Weiterhin wird das Schüttgut aus dem Behältnis durch eine unterhalb der Zwischenplatte vorgesehene Öffnung ausgeführt.
Erfindungsgemäß ruht das Verteilgitter gegenüber dem Behältnis und die Zwischenplatte bewegt sich gegenüber dem Behältnis und insbesondere dreht sich die Zwischenplatte gegenüber dem Behaltnis.

Bevorzugt fällt das Schüttgut unterhalb der Zwischenplatte auf eine Bodenplatte.

Bei einem weiteren bevorzugten Verfahren wird das Schüttgut mittels einer Verschiebeeinrichtung gegenüber der Bodenplatte verschoben und durch diese Verschiebung schließlich aus der Vorrichtung ausgetragen.

Weitere Vorteile und Ausführungsformen ergeben sich aus den beigefügten Zeichnungen.

Darin zeigen:
Fig. 1 eine erste teilgeschnittene Ansicht einer erfindungsgemäßen Vorrichtung;
Fig. 2 eine Querschnittsdarstellung der Vorrichtung aus Fig. 1; und
Fig. 3 eine weitere perspektivische Darstellung der Vorrichtung aus Fig. 1.

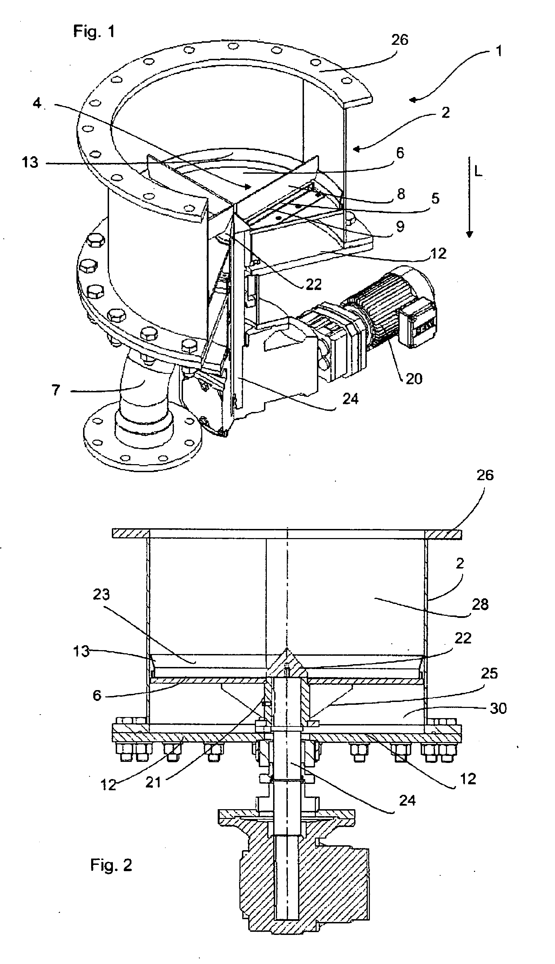

Fig. 1 zeigt eine perspektivische Darstellung einer erfindungsgemäßen Vorrichtung 1. Diese Vorrichtung weist ein Behältnis 2 auf, welches mit Hilfe eines Flansches 26 an ein Silo (nicht gezeigt) angeflanscht werden kann, beispielsweise an eine Unterseite eines solchen Silos.

Innerhalb des Behältnisses 2 ist ein in seiner Gesamtheit mit 4 bezeichnetes Verteilgitter vorgesehen, welches bei der in Fig. 1 gezeigten Darstellung vier sich in radialer Richtung erstreckende Arme (bzw. senkrechte Bleche) 8 aufweist. Dieses Verteilgitter ist stationär gegenüber dem Behältnis 2 angeordnet. Das Bezugszeichen 13 bezieht sich auf einen trichterförmigen Rand, der ebenfalls gemeinsam mit dem Verteilgitter 4 stationär angeordnet ist. Unterhalb des Verteilgitters 4 ist eine Zwischenplatte 6 vorgesehen, welche drehbar innerhalb des Behältnisses 2 angeordnet ist. Das Verteilgitter 4 ist dabei derart angeordnet, dass die einzelnen Arme nicht direkt die Zwischenplatte 6 kontaktieren, sondern geringfügig oberhalb der Zwischenplatte angeordnet sind.

Auf diese Weise kann ein Austragen des Schüttguts in "schabender Weise" vorgenommen werden. In der Zwischenplatte 6 ist eine Durchtrittsöffnung 5 in Form eines sich in radialer Richtung erstreckenden Schlitzes vorgesehen. Weiterhin weist die Zwischenplatte 6 eine Schräge 9 auf, welche die darunter liegende Durchtrittsöffnung 5 in der senkrechten Richtung L abdeckt. Diese Schräge befindet sich in der Drehrichtung der Zwischenplatte vor der Durchtrittsöffnung. Bei der in Fig. 1 gezeigten Ausführungsform dreht sich daher die Zwischenplatte 6 entgegen dem Urzeigersinn. Die Zwischenplatte 6 wird mit Hilfe eines Motors 20 über eine Welle 24 angetrieben.

Unterhalb der Zwischenplatte ist eine Bodenplatte 12 vorgesehen, die wiederum stationär angeordnet ist. Diese Bodenplatte 12, die bevorzugt aus Edelstahl gefertigt ist, weist eine (in Fig. 1 nicht gezeigte) Öffnung auf, über welche das Schüttgut durch eine Abführleitung 7 abgeführt werden kann. Weiterhin ist zwischen der Zwischenplatte 6 und der Bodenplatte 12 eine oberhalb der Bodenplatte 12 angeordnete Verschiebeeinrichtung vorgesehen, welche das durch die Durchtrittsöffnung 5 gefallene Schüttgut gegenüber der Bodenplatte 12 solange verschiebt, bis es durch die in der Bodenplatte 12 vorgesehene Austrittsöffnung austreten kann.

Damit bildet der Raum unterhalb der Zwischenplatte 6 eine Austragskammer 30 für das Schüttgut und der Raum oberhalb der Zwischenplatte 6 eine Vorratskammer 28. Dabei ist die Vorrichtung 1 derart dimensioniert, dass die Vorratskammer 28 ein größeres Volumen aufweist als die unterhalb der Zwischenplatte 6 angeordnete Austragskammer 30.

Fig. 2 zeigt eine Querschnittsdarstellung der in Fig. 1 gezeigten Vorrichtung. Man erkennt hier, dass oberhalb der Zwischenplatte 6 ein kegelförmiger Körper 22 angeordnet ist, der hier gemeinsam mit der Zwischenplatte 6 rotiert und eine vollständige Entleerbarkeit des Silos ermöglicht. Zwischen der Zwischenplatte 6 und der Bodenplatte 12 ist weiterhin eine Antriebshülse 21 vorgesehen sowie Träger 25, welche die Zwischenplatte 12 drehbar abstützen. Bei dem erfindungsgemäßen Verfahren wäre es beispielsweise möglich, Chargen mit einer vorbestimmten Masse auf den Austragsboden bzw. in das Behältnis einzubringen. Die Durchtrittsöffnung 5 weist in radialer Richtung eine Breite zwischen 3 mm und 20 mm, bevorzugt zwischen 5 mm und 16 mm und besonders bevorzugt zwischen 6 mm und 12 mm auf.

Die zu wählende Anzahl an Armen 8 hängt unter anderem auch von der Beschaffenheit des konkreten Schüttguts ab. Der Vorteil von weniger Armen, beispielsweise den in Fig. 1 gezeigten vier Armen 8, besteht darin, dass weniger Schüttgut bzw. Flakes auf dem Gitter bzw. den Armen 8 selbst liegen und auch weniger Einbauteile nötig sind. Jedoch wird hier die Gefahr einer rückwärtigen Vermischung erhöht. Das Vorsehen einer größeren Anzahl von Armen 8 vermindert die Gefahr einer rückwärtigen Vermischung, allerdings wird der Aufwand durch die nötigen Einbauten erhöht.

Durch die Geometrie des Austrags kann einer Einschränkung der senkrechten gleichmäßigen Beweglichkeit des Schüttguts im Silo entgegen gewirkt werden.

Die oberhalb der Zwischenplatte 6 vorgesehene Vorratskammer 28 ist gegenüber der unterhalb der Zwischenplatte 6 vorgesehenen Austragskammer durch eine Dichteinrichtung und besonders bevorzugt durch eine Labyrinthdichtung getrennt. Durch diese Dichtung wird ein direktes Durchfallen von Schüttgut außerhalb der Durchtrittsöffnung 5 verhindert. Der Bereich bzw. trichterförmige Rand 13 dient, wie gesagt, als Abweiser für das Schüttgut und damit der Vermeidung von Brückenbildung.

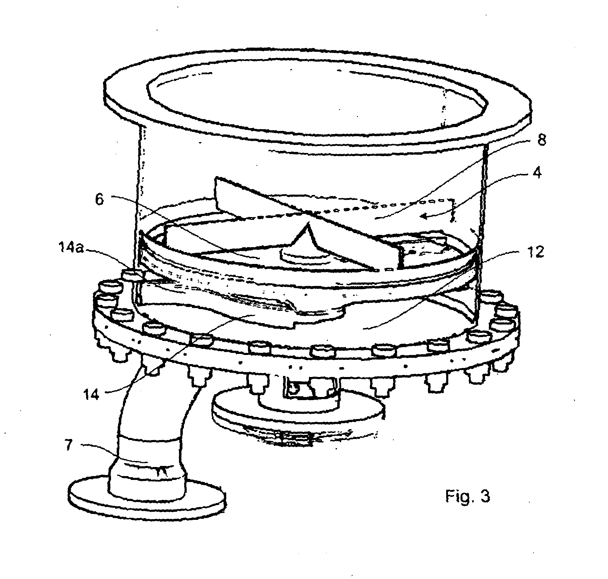

Fig. 3 zeigt eine weitere Darstellung einer erfindungsgemäßen Vorrichtung. Man erkennt hier die unterhalb der Zwischenplatte 6 jedoch oberhalb der Bodenplatte 12 angeordnete Verschiebeeinrichtung 14. Diese Verschiebeeinrichtung dreht sich jedenfalls gegenüber der Bodenplatte 12. Vorzugsweise ist die Drehbewegung dieser Verschiebeeinrichtung 14 mit der Drehbewegung der Zwischenplatte 6 synchronisiert bzw. gekoppelt.

Mittels dieser Verschiebeeinrichtung 14 wird das auf die Bodenplatte 12 durchgefallene Schüttgut gegenüber der Bodenplatte 12 verschoben und schließlich zu einer (nicht gezeigten) Austrittsöffnung gedrängt, durch welche es hindurch fallen kann. Diese Austrittsöffnung ist bei der in Fig. 3 gezeigten Ausführungsform hinter der Verschiebeeinrichtung 14 vorgesehen. Vorzugsweise weist diese Austrittsöffnung ein kreisförmiges Profil auf.

Auch die Verschiebeeinrichtung 14 ist von der Bodenplatte 12 zumindest geringfügig beabstandet. Es wäre jedoch auch möglich, mehr als eine derartige Verschiebeeinrichtung vorzusehen. Man erkennt, dass die Verschiebeeinrichtung eine Krümmung 14a aufweist, welche so gestaltet ist, dass während der Rotation der Verschiebeeinrichtung 14 entgegen dem Urzeigersinn das Schüttgut in diese Krümmung gedrängt wird. Unterhalb dieser Krümmung liegt bei einer vorgegebenen Drehstellung der Verschiebeeinrichtung genau die Öffnung in der Bodenplatte 12. Auf diese Weise wird ein besonders effizienter Austrag des Schüttguts durch die Bodenplatte 12 hindurch erreicht.

Genauer gesagt ist diese Krümmung 14a angepasst an den Öffnungsquerschnitt der Austragsöffnung und der oben erwähnte Abstand der Verschiebeeinrichtung bzw. des Rechens ist auch hier wieder abhängig vom Schüttgut. Vorzugsweise ist dieser Abstand gegenüber der Bodenplatte veränderbar. Auf diese Weise wird ein Zerkleinern oder Zermahlen des Schüttguts verhindert und damit das Produkt geschont.

Um eine vollständige Entleerung der Vorrichtung zu erreichen, könnten noch zusätzliche verbessernde Maßnahmen getroffen werden. So könnte oberhalb der Zwischenplatte 6 eine ebenfalls rotierende Bürste vorgesehen sein. Weiterhin wäre es möglich, oberhalb der Zwischenplatte Gummilappen vorzusehen, welche ebenfalls eine vollständige Entleerung bewirken. Weiterhin wäre es möglich, eine vollständige Entleerung mit Hilfe eines Gebläses oberhalb der Zwischenplatte oder auch unterhalb der Zwischenplatte zu erreichen. Weiterhin wäre es möglich, eine vollständige Entleerung mittels einer elektrostatischen Aufladung der einzelnen Flakes zu bewirken.

## Patentansprüche

1. Vorrichtung (1) zum Austragen von Schüttgut mit einem Behältnis (2) in das das Schüttgut einfüllbar ist, mit einem in dem Behältnis (2) angeordneten Verteilgitter (4) und einer unterhalb des Verteilgitters (4) angeordneten Zwischenplatte (6), wobei die Zwischenplatte (6) eine Durchtrittsöffnung (5) für das Schüttgut aufweist, sowie einer unterhalb der Zwischenplatte (6) vorgesehenen Öffnung, durch welche hindurch das Schüttgut aus dem Behältnis (2) entnommen werden kann, **dadurch gekennzeichnet, dass** die Zwischenplatte (6) gegenüber dem Verteilgitter (4) drehbar und das Verteilgitter (4) stationär gegenüber dem Behältnis (2) angeordnet ist.

2. Vorrichtung (1) nach Anspruch 1, **dadurch gekennzeichnet, dass** unterhalb der Zwischenplatte (6) eine gegenüber dem Behältnis (2) stationäre Bodenplatte (12) vorgesehen ist und die Öffnung (8) in dieser Bodenplatte (12) vorgesehen ist.

3. Vorrichtung (1) nach Anspruch 2, **dadurch gekennzeichnet, dass** oberhalb der Bodenplatte (12) eine gegenüber dem Behältnis (2) drehbare Verschiebeeinrichtung (14) vorgesehen ist, welche das Schüttgut gegenüber der Bodenplatte (12) verschiebt.

4. Vorrichtung (1) nach Anspruch 3, **dadurch gekennzeichnet, dass** die Verschiebeinrichtung (14) eine an den Öffnungsquerschnitt der Öffnung angepasste Krümmung (14a) aufweist.

5. Vorrichtung (1) nach wenigstens einem der vorangegangenen Ansprüche, **dadurch gekennzeichnet, dass** die Durchtrittsöffnung (5) ein sich in einer radialen Richtung der Zwischenplatte (6) erstreckender Schlitz ist.

6. Vorrichtung (1) nach wenigstens einem der vorangegangenen Ansprüche, **dadurch gekennzeichnet, dass** die Zwischenplatte (4) in der Drehrichtung vor der Durchtrittsöffnung (5) eine Schräge (9) aufweist, welche die unter dieser Schräge (9) liegende Durchtrittsöffnung (5) verdeckt.

7. Vorrichtung (1) nach wenigstens einem der vorangegangenen Ansprüche, **dadurch gekennzeichnet, dass** die Vorrichtung (1) eine Antriebseinrichtung aufweist, welche die Zwischenplatte (6) antreibt und diese Antriebseinrichtung (20) unterhalb des Behältnisses (2) vorgesehen ist.

8. Vorrichtung (1) nach wenigstens einem der vorangegangenen Ansprüche, **dadurch gekennzeichnet, dass** das Verteilgitter zwischen 3 und 12, bevorzugt zwischen 4 und 10 und besonders bevorzugt zwischen 4 und 8 sich einer radialen Richtung der Zwischenplatte (6) erstreckende Arme (8) aufweist.

9. Vorrichtung (1) nach wenigstens einem der vorangegangenen Ansprüche, **dadurch gekennzeichnet, dass** das Verteilgitter (4) von der Zwischenplatte (6) beabstandet ist.

10. Vorrichtung (1) nach wenigstens einem der vorangegangenen Ansprüche, **dadurch gekennzeichnet, dass** die Vorrichtung (1) oberhalb der Zwischenplatte (6) einen zentral angeordneten kegelförmigen Verteilkörper (22) aufweist.

11. Verfahren zum Austragen von Schüttgut aus einem Behältnis (2) mit den Schritten:
- Einfüllen des Schüttguts in das Behältnis (2), wobei das Schüttgut von oben auf eine Zwischenplatte (6) aufgebracht wird, welche sich gegenüber einem Verteilgitter (4), welches oberhalb der Zwischenplatte (6) angeordnet ist, dreht;
- Durchführen des Schüttguts durch wenigstens eine in der Zwischenplatte (6) vorgesehene Öffnung (5);
- Abführen des Schüttguts aus dem Behältnis (2) durch eine unterhalb der Zwischenplatte (6) vorgesehene Öffnung **dadurch gekennzeichnet, dass** das Verteilgitter (2) gegenüber dem Behältnis (2) ruht und sich die Zwischenplatte (6) gegenüber dem Behältnis (2) bewegt.

12. Verfahren nach Anspruch 11, **dadurch gekennzeichnet, dass** das Schüttgut unterhalb der Zwischenplatte (6) auf eine Bodenplatte (12) fällt.

13. Verfahren nach Anspruch 12, **dadurch gekennzeichnet, dass** das Schüttgut mittels einer Verschiebeeinrichtung (14) gegenüber der Bodenplatte (12) verschoben wird.

## Claims

1. Device (1) for discharging granular material, with a receptacle (2) into which the granular material may be introduced, with a separation grid (4), which is disposed in the receptacle (2), and an intermediate plate (6), which is disposed beneath the separation grid (4),
wherein the intermediate plate (6) is equipped with a through-opening (5) for the granular material, and with an aperture, which is provided beneath the intermediate plate (6) and through which the granular material may be removed from the receptacle (2), **characterised in that** the intermediate plate (6) is disposed to be rotatable relative to the separation grid (4) and the separation grid (4) is disposed to be stationary relative to the receptacle (2).

2. Device (1) according to Claim 1, **characterised in that** a base plate (12), which is stationary relative to the receptacle (2), is provided beneath the intermediate plate (6), and the aperture (8) is disposed in this base plate (12).

3. Device (1) according to Claim 2, **characterised in that** provided above the base plate (12) is a displacement apparatus (14), which is rotatable relative to the receptacle (2) and which displaces the granular material relative to the base plate (12).

4. Device (1) according to Claim 3, **characterised in that** the displacement apparatus (14) is equipped with a curvature (14a) matched to the aperture-cross-section of the aperture.

5. Device (1) according to at least one of the preceding claims, **characterised in that** the through-opening (5) is a slot extending in a radial direction of the intermediate plate (6).

6. Device (1) according to at least one of the preceding claims, **characterised in that**, before the through-opening (5) in the direction of rotation, the intermediate plate (4) is equipped with an oblique surface (9), which conceals the through-opening (5) located beneath this oblique surface (9).

7. Device (1) according to at least one of the preceding claims, **characterised in that** the device (1) is equipped with an actuating apparatus, which actuates the intermediate plate (6), and that this actuating apparatus (20) is provided beneath the receptacle (2).

8. Device (1) according to at least one of the preceding claims, **characterised in that** the separation grid is equipped with between 3 and 12 (8), between 4 and 10 being preferred and between 4 and 8 arms being especially preferred, which arms (8) extend in a radial direction of the intermediate plate (6).

9. Device (1) according to at least one of the preceding claims, **characterised in that** the separation grid (4) is disposed at a distance from the intermediate plate (6).

10. Device (1) according to at least one of the preceding claims, **characterised in that** the device (1) is equipped with a conical distributing element (22), which is centrally disposed above the intermediate plate (6).

11. Method of discharging granular material from a receptacle (2) with the following steps:
- introduction of the granular material into the receptacle (2), wherein the granular material is introduced from above onto an intermediate plate (6), which rotates relative to a separation grid (4), which is disposed above the intermediate plate (6);
- carriage of the granular material through at least one aperture (5) provided in the intermediate plate (6);
- discharging of the granular material from the receptacle (2) through an aperture provided beneath the intermediate plate (6), **characterised in that** the separation grid (2) is stationary relative to the receptacle (2), and the intermediate plate (6) moves relative to the receptacle (2).

12. Method according to Claim 11, **characterised in that** below the intermediate plate (6), the granular material falls onto a base plate (12).

13. Method according to Claim 12, **characterised in that** the granular material is displaced relative to the base plate (12) by means of a displacement apparatus (14).

## Revendications

1. Dispositif (1) pour le déversement de produit en vrac, avec un réservoir (2) où le produit en vrac peut être versé, avec une grille (4) de répartition disposée dans le réservoir (2) et une plaque (6) intercalaire disposée sous la grille (4) de répartition, ladite plaque intercalaire (6) comportant une ouverture (5) de passage pour le produit en vrac, ainsi qu'une ouverture prévue sous la plaque (6) intercalaire, par laquelle le produit en vrac peut être prélevé du réservoir (2), **caractérisé en ce que** la plaque (6) intercalaire est rotative par rapport à la grille (4) de répartition et la grille (4) de répartition fixe par rapport au réservoir (2).

2. Dispositif (1) selon la revendication 1, **caractérisé en ce qu'**une plaque (12) de fond fixe par rapport au réservoir (2) est prévue en dessous de la plaque (6) intercalaire, et **en ce que** l'ouverture (8) est prévue dans ladite plaque (12) de fond.

3. Dispositif (1) selon la revendication 2, **caractérisé en ce qu'**un mécanisme (14) de déplacement rotatif par rapport au réservoir (2) est prévu au-dessus de la plaque (12) de fond, lequel déplace le produit en vrac par rapport à la plaque (12) de fond.

4. Dispositif (1) selon la revendication 3, **caractérisé en ce que** le mécanisme (14) de déplacement présente une courbure (14a) ajustée à la section de l'ouverture.

5. Dispositif (1) selon au moins une des revendications précédentes, **caractérisé en ce que** l'ouverture (5) de passage est une fente s'étendant dans une direction radiale de la plaque (6) intercalaire.

6. Dispositif (1) selon au moins une des revendications précédentes, **caractérisé en ce que** la plaque (6) intercalaire présente un biseau (9) devant l'ouverture (5) de passage dans la direction de rotation, lequel recouvre l'ouverture (5) de passage située sous ledit biseau (9).

7. Dispositif (1) selon au moins une des revendications précédentes, **caractérisé en ce que** le dispositif (1) comporte un mécanisme d'entraînement qui entraîne la plaque (6) intercalaire, et **en ce que** ledit mécanisme (20) d'entraînement est prévu en dessous du réservoir (2).

8. Dispositif (1) selon au moins une des revendications précédentes, **caractérisé en ce que** la grille de répartition comporte entre 3 et 12, avantageusement entre 4 et 10 et préférentiellement entre 4 et 8 bras (8) s'étendant dans une direction radiale de la plaque (6) intercalaire.

9. Dispositif (1) selon au moins une des revendications précédentes, **caractérisé en ce que** la grille (4) de répartition est espacée de la plaque (6) intercalaire.

10. Dispositif (1) selon au moins une des revendications précédentes, **caractérisé en ce que** le dispositif (1) comporte un corps (22) de répartition conique disposé centralement au-dessus de la plaque (6) intercalaire.

11. Procédé de déversement de produit en vrac hors d'un réservoir (2), comportant les étapes :
- de remplissage du réservoir (2) avec le produit en vrac, ledit produit en vrac étant versé par en haut sur une plaque (6) intercalaire en rotation par rapport à une grille (4) de répartition disposée au-dessus de la plaque (6) intercalaire ;
- de passage du produit en vrac par au moins une ouverture (5) prévue dans la plaque (6) intercalaire ;
- d'évacuation du produit en vrac hors du réservoir (2) par une ouverture prévue en-dessous de la plaque (6) intercalaire, **caractérisé en ce que** la grille (4) de répartition est immobile par rapport au réservoir (2) et **en ce que** la plaque (6) intercalaire est mobile par rapport au réservoir (2).

12. Procédé selon la revendication 11, **caractérisé en ce que** le produit en vrac tombe sur une plaque (12) de fond en-dessous de la plaque (6) intercalaire.

13. Procédé selon la revendication 12, **caractérisé en ce que** le produit en vrac est déplacé par rapport à la plaque (12) de fond au moyen d'un mécanisme (14) de déplacement.
